# FASCICULE DE BREVET EUROPEEN

(11) **EP 1 628 518 B1**
(45) Date de publication et mention de la délivrance du brevet: **18.10.2006**
(21) Numéro de dépôt: 04767827.1
(22) Date de dépôt: 07.05.2004
(51) Int. Cl.: A01D 43/10

(54) **DISPOSITIF DE TRAITEMENT DU FOURRAGE**
VORRICHTUNG ZUR BEHANDLUNG VON FUTTERPFLANZEN
DEVICE FOR PROCESSING FODDER

(30) Priorité: 23.05.2003 FR 0306286
(43) Date de publication de la demande: 01.03.2006
(73) Titulaire: KUHN S.A., 67706 Saverne Cedex (FR)
(72) Inventeur: WILHELM, Joel, F-57820 SAINT-LOUIS (FR)
(74) Mandataire: Andres, Jean-Claude
(86) Numéro de dépôt international: PCT/FR2004/050183
(87) Numéro de publication internationale: WO 2004/105462

(56) Documents cités:
- EP-A- 0 064 115
- US-A- 3 092 946
- US-A- 4 539 798
- US-A- 5 894 716
- US-A- 5 966 913

## Description

La présente invention se rapporte au domaine technique général du machinisme agricole. Elle concerne plus précisément un dispositif de traitement du fourrage comportant :
- un caisson pourvu d'une section d'entrée et d'une section de sortie pour le fourrage,
- un rotor lié audit caisson de manière à être entraîné en rotation autour d'un axe longitudinal afin de transporter ledit fourrage vers ladite section de sortie,
- un premier élément de guidage entourant partiellement ledit rotor de manière à définir un canal de passage pour ledit fourrage, et
- un deuxième élément de guidage disposé de manière à guider le flux de fourrage sortant dudit canal de passage, ledit deuxième élément de guidage pouvant être disposé dans au moins deux configurations par rapport audit rotor.

Il est courant d'équiper une faucheuse agricole avec un tel dispositif de traitement du fourrage. En effet le dispositif de traitement du fourrage, encore appelé conditionneur, permet avantageusement de réduire le temps nécessaire au séchage du produit coupé par la faucheuse. Le document **EP 1 008 290 A1** décrit une faucheuse comportant un dispositif de coupe destiné à couper un produit sur pied tel que de l'herbe par exemple. Cette faucheuse connue comporte également un dispositif de traitement du fourrage disposé en arrière du dispositif de coupe. Ce dispositif de traitement du fourrage comporte à son tour un rotor entraîné en rotation autour d'un axe horizontal. Ainsi lors du travail, le fourrage provenant du mécanisme de coupe est emmené par le rotor le long d'une tôle de conditionnement pour finalement être éjecté vers l'arrière de ladite faucheuse. Le passage du fourrage contre la tôle de conditionnement provoque une fragmentation de la pellicule de cire recouvrant les tiges du produit coupé. Cette fragmentation permet une évacuation plus rapide de l'humidité contenue dans la plante, d'où un séchage accéléré. Ce dispositif de traitement connu comporte en sus une tôle de guidage disposée plus en aval de la tôle de conditionnement. Cette tôle de guidage est liée aux parois d'un caisson de manière à pouvoir occuper deux positions dans lesquelles elle dirige de manière différente le flux de fourrage.

L'inconvénient de ce dispositif de traitement du fourrage réside dans le fait que la tôle de conditionnement occupe une position unique vis-à vis du rotor. Les possibilités de réglage de l'intensité du conditionnement sont donc très limitées. L'utilisateur n'a donc pas la possibilité d'adapter convenablement ce dispositif connu aux différents types et quantités de fourrage qu'il peut rencontrer.

Le document **EP 0 064 114 A1** décrit un autre dispositif de traitement du fourrage. Celui-ci comporte également un rotor entraîné en rotation et couvert par une tôle de conditionnement. La position de cette tôle de conditionnement par rapport au rotor est cette fois réglable. Cependant ce document antérieur ne décrit pas l'emploi d'une deuxième tôle permettant le guidage du flux de fourrage en aval de la tôle de conditionnement.

Le document US 4 539 798 décrit un dispositif de ramassage de produits coupés comportant un rotor logé dans une structure composée de parties latérales et d'un capot frontal. Ce capot forme avec le rotor un canal pour le passage des produits. Il est réalisé en une ou deux sections qui s'étendent pratiquement dans le prolongement l'une de l'autre, lesquelles sections sont mobiles pour s'adapter à la masse des produits devant passer par ledit canal. Ce dispositif ne comporte pas de moyens permettant de régler l'intensité du traitement du fourrage ni de moyens permettant de modifier l'orientation du flux des produits à la sortie.

Le but de la présente invention est d'obtenir un dispositif de traitement du fourrage avec lequel l'utilisateur a de multiples possibilités pour régler l'intensité du conditionnement, tout en évitant de perturber la continuité du flux de fourrage et avec lequel il est possible de modifier d'une manière simple et rapide l'orientation du flux de fourrage à la sortie du rotor.

A cet effet, le dispositif de traitement du fourrage selon la présente invention est caractérisé par le fait qu'il est prévu un premier organe de commande destiné à déplacer le premier élément de guidage dans au moins deux positions par rapport au rotor et à le maintenir dans ces positions, qu'il est prévu une liaison entre ledit premier élément de guidage et ledit deuxième élément de guidage de manière à ce qu'un changement de position dudit premier élément de guidage modifie, dans sa première configuration, la position dudit deuxième élément de guidage et qu'il est prévu un deuxième organe de commande destiné à disposer ledit deuxième élément de guidage suivant les différentes configurations.

Les différentes positions du premier élément de guidage permettent avantageusement de modifier la distance et/ou l'orientation du premier élément de guidage par rapport au rotor. De ce fait on agit directement sur le degré de fractionnement du fourrage, donc sur l'intensité de conditionnement. Grâce à la liaison prévue, la position du deuxième élément de guidage s'adapte automatiquement au réglage du premier élément de guidage. Ainsi ce réglage n'engendre pas de décrochement ou changement brusque de direction dans la trajectoire définie par les éléments de guidage. Le flux de fourrage conserve donc avantageusement un écoulement régulier. Le deuxième organe de commande permet de disposer le deuxième élément de guidage dans une autre configuration dans laquelle il modifie la direction du flux de produits à la sortie du rotor.

D'autres caractéristiques de l'invention, à considérer séparément ou dans toutes leurs combinaisons possibles, apparaîtront encore dans la description suivante d'un exemple de réalisation non limitatif de l'invention représenté sur les dessins annexés sur lesquels :
- **la figure 1** représente vue de dessus une faucheuse agricole conforme à la présente invention,
- **la figure 2** représente une vue de côté de la faucheuse suivant la flèche II définie à la figure 1, le deuxième dispositif de guidage étant disposé suivant une première configuration,
- **la figure 3** représente une partie de la figure 2 montrant le deuxième dispositif de guidage disposé suivant une deuxième configuration,
- **la figure 4** représente, vu de côté suivant la flèche II et à une autre échelle, un dispositif de traitement du fourrage conforme à la présente invention,
- **les figures 5 à 7** représentent, vu de côté et à une autre échelle, le dispositif de traitement du fourrage de la figure 4 disposé dans trois positions de réglage différentes.
- **la figure 8** représente un agrandissement suivant la zone VIII définie à la figure 4.

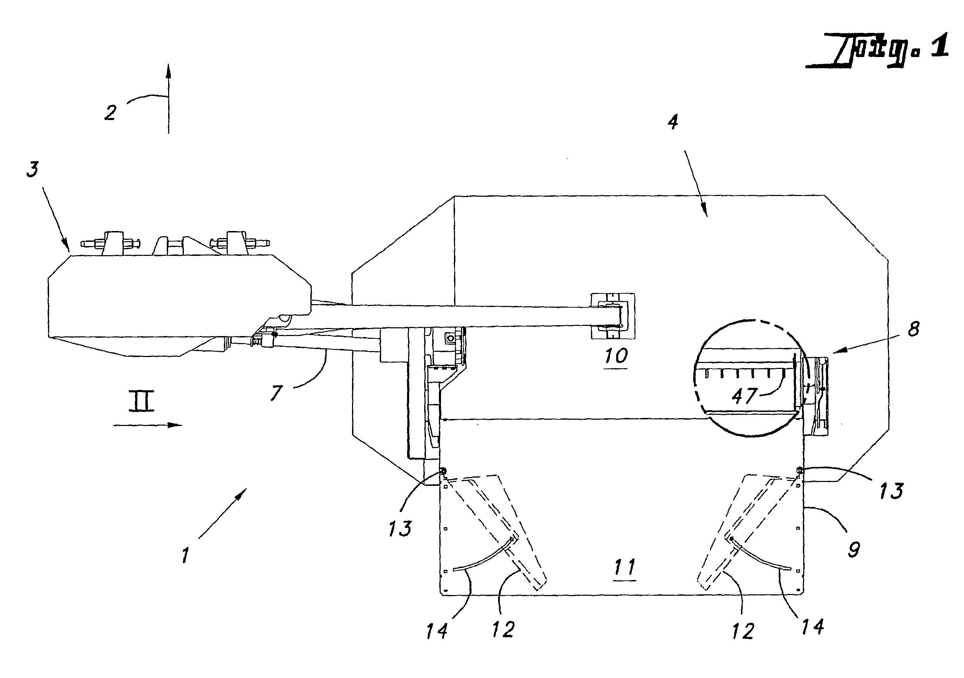

La figure 1 représente une faucheuse agricole (1) conforme à la présente invention. Ladite faucheuse (1) est destinée à être attelée à un véhicule moteur (non représenté) qui la déplace suivant une direction et un sens d'avance indiqués par la flèche (2). Dans la suite de la description, les notions suivantes "avant" et "arrière", "devant" et "derrière" sont définies par rapport au sens d'avance (2) et les notions "droite" et "gauche" sont définies en regardant ladite faucheuse (1) de l'arrière dans le sens d'avance (2).

D'une manière connue, ladite faucheuse (1) comporte un dispositif de coupe (4) destiné à couper un produit sur pied tel que de l'herbe par exemple. Ledit dispositif de coupe (4) est lié audit véhicule moteur au moyen d'un châssis (3). Ledit châssis (3) permet avantageusement d'amener ledit dispositif de coupe (4) d'une position de travail dans une position de transport. Dans la position de travail telle que représentée sur la figure 1, ledit dispositif de coupe (4) repose au moins partiellement sur le sol. D'une manière préférentielle, ledit châssis (3) comporte des moyens, par exemple des ressorts, pour reporter en position de travail au moins une partie du poids dudit dispositif de coupe (4) sur ledit véhicule moteur. Lors du travail, ledit châssis (3) permet également audit dispositif de coupe (4) de suivre les contours du sol, indépendamment de la position dudit véhicule moteur. Un tel châssis (3) est connu de l'homme de l'art, il ne sera donc pas décrit plus en détails.

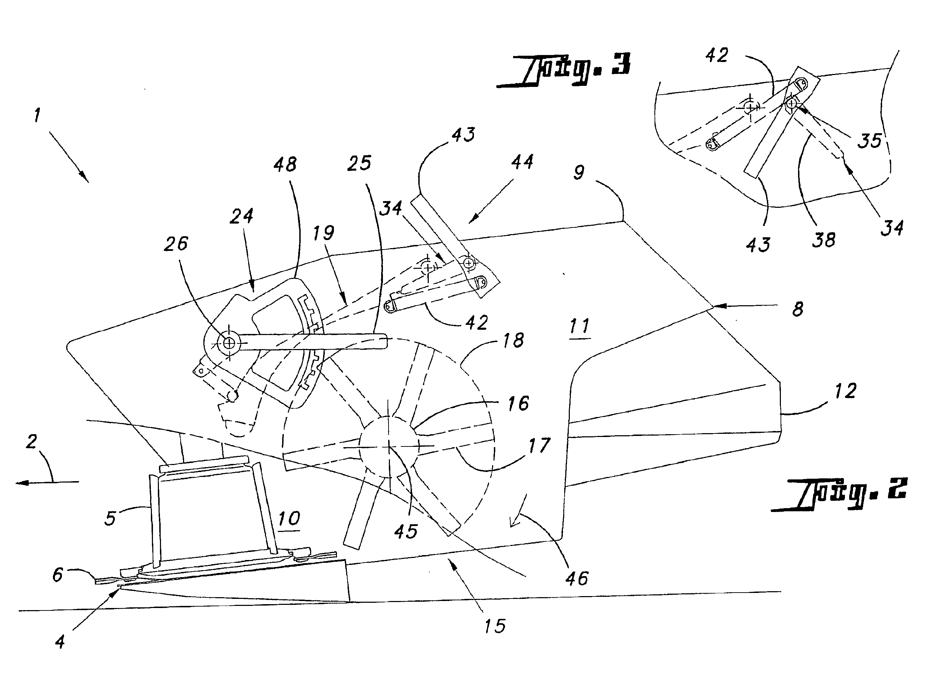

Pour sa part, ledit dispositif de coupe (4) comporte des organes de coupe (5) disposés suivant une ligne au moins sensiblement perpendiculaire à ladite direction d'avance (2). Lesdits organes de coupe (5) sont visibles sur la figure 2 grâce à une coupe partielle réalisée dans ledit dispositif de coupe (4). Lors du travail, chaque organe de coupe (5) est entraîné en rotation autour d'un axe respectif dirigé vers le haut. Des couteaux (6), liés à la périphérie desdits organes de coupe (5), décrivent ainsi des cercles à grande vitesse et viennent couper par impact ledit produit sur pied. L'animation dudit dispositif de coupe (4) est assurée au moyen d'éléments de transmission (7) reliés à une prise de force dudit véhicule moteur. D'autres moyens pour couper le produit sur pied peuvent être utilisés sans pour autant sortir du cadre de la présente invention.

D'une manière également connue, ladite faucheuse (1) comporte en sus un dispositif de traitement du fourrage (8) destiné à accélérer le séchage du produit coupé. Dans l'exemple de réalisation représenté sur les figures, ledit dispositif de traitement du fourrage (8) est disposé à l'arrière dudit dispositif de coupe (4). Ainsi d'une manière avantageuse, le fourrage sortant du dispositif de coupe (4) alimente directement ledit dispositif de traitement du fourrage (8).

A la lumière de la figure 2, ledit dispositif de traitement du fourrage (8) comprend un caisson (9) lié audit dispositif de coupe (4). Ledit caisson (9) présente une section d'entrée (10) située derrière ledit dispositif de coupe (4) ainsi qu'une section de sortie (11) située à l'arrière de ladite faucheuse (1).

Dans l'exemple de réalisation représenté sur les figures, ladite section de sortie (11) est avantageusement pourvue de déflecteurs latéraux (12) pour réaliser un andain calibré de produit coupé et traité. L'orientation desdits déflecteurs latéraux (12) peut être modifiée grâce à leur montage pivotant autour d'un pivot (13) et d'une rainure de guidage (14) représentés à la figure 1. L'utilisateur peut ainsi régler la largeur de l'andain déposé au sol.

Ledit dispositif de traitement du fourrage (8) comporte également un rotor (15) destiné à entraîner le fourrage vers ladite section de sortie (11). Pour ce faire ledit rotor (15) est constitué d'un arbre (16) monté pivotant dans ledit caisson (9) selon un axe (45) sensiblement horizontal et transversal à ladite direction d'avance (2). Lors du travail, ledit arbre (16) est entraîné en rotation directement ou indirectement par la prise de force dudit véhicule moteur au moyen desdits éléments de transmission (7). Le sens de rotation dudit rotor (15) est représenté sur les figures par la flèche (46). Ledit arbre (16) est en outre pourvu de doigts (17) lesquels s'étendent lors du travail radialement vers l'extérieur en définissant une trajectoire périphérique (18). Lesdits doigts (17) peuvent présenter diverses formes connues par l'homme du métier. D'une manière préférentielle, un montage pivotant desdits doigts (17) sur ledit arbre (16) permet auxdits doigts (17) de s'escamoter au moins partiellement dans le cas où un obstacle ou une quantité anormale de fourrage pénètre dans ledit dispositif de traitement du fourrage (8).

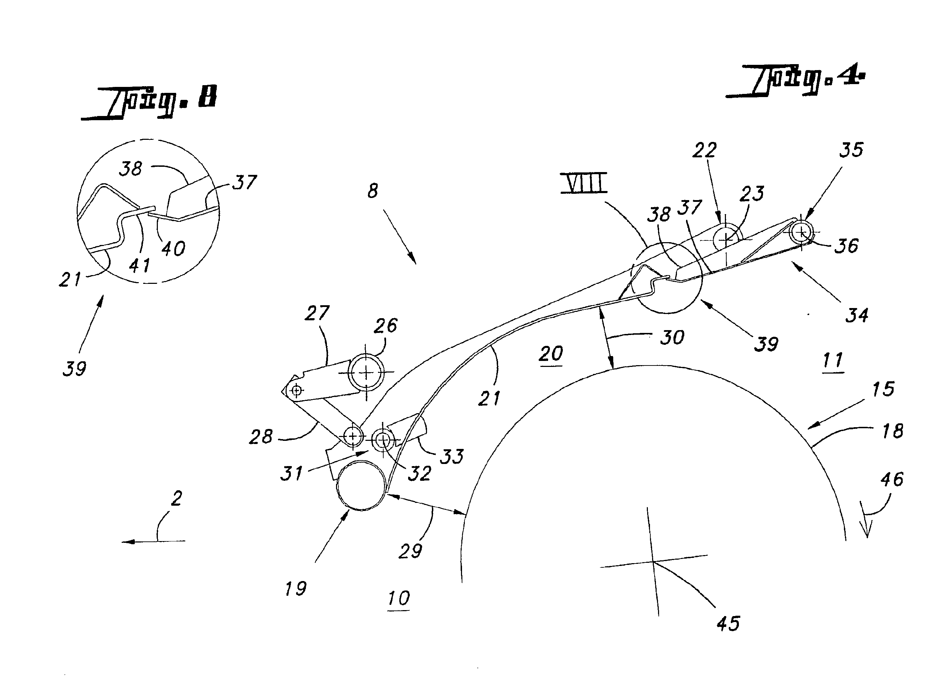

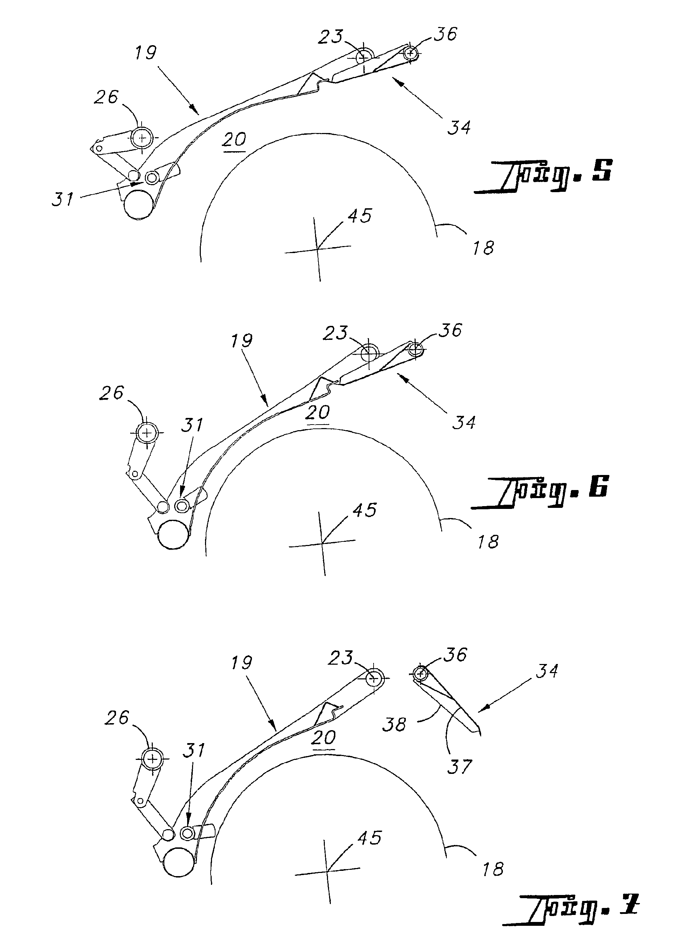

A la lumière notamment de la figure 4, ledit dispositif de traitement du fourrage (8) conforme à l'invention comporte également un premier élément de guidage (19) agencé en regard dudit rotor (15), de manière à définir un canal de passage (20) pour le fourrage. Ledit canal de passage (20) est donc localisé entre une surface active (21) dudit premier élément de guidage (19) et ladite trajectoire périphérique (18) desdits doigts (17). Ladite surface active (21) présente avantageusement une forme profilée entourant au moins partiellement ladite trajectoire périphérique (18). Le conditionnement du fourrage est causé par l'impact desdits doigts (17) et par son passage au travers dudit canal de passage (20).

Selon une caractéristique importante de la présente invention, ledit premier élément de guidage (19) peut occuper au moins deux positions par rapport audit rotor (15).

Ainsi dans l'exemple de réalisation représenté sur les figures, ledit premier élément de guidage (19) est lié de manière pivotante audit caisson (9) au moyen d'une articulation (22) d'axe (23). Ledit axe (23) est avantageusement parallèle audit axe de rotation (45) dudit rotor (15). Il est également prévu un premier organe de commande (24) destiné à pivoter ledit premier élément de guidage (19) autour de ladite articulation (22) et à le maintenir dans différentes positions. De ce fait, une action sur ledit premier organe de commande (24) engendre une modification de la section dudit canal de passage (20) et donc une modification de l'intensité du conditionnement.

A la lumière de la figure 2, ledit premier organe de commande (24) se compose d'un levier (25) lié de manière pivotante audit caisson (9) au moyen d'un arbre (26) disposé sensiblement parallèlement audit axe (45) dudit rotor (15). D'une manière préférentielle, ledit levier (25) peut occuper différentes positions définies par un organe de repérage et de blocage (48) lié rigidement audit caisson (9). Ledit levier (25) et ledit organe de repérage et de blocage (48) sont avantageusement situés en dehors dudit caisson (9) de manière à être facile d'accès pour l'utilisateur. En se reportant plus précisément à la figure 4, ledit premier organe de commande (24) se compose en sus d'un bras (27) lié rigidement audit arbre (26). Il est également prévu une biellette (28) reliant une extrémité dudit bras (27) audit premier élément de guidage (19) au moyen d'articulations pivots. De ce fait, tout changement de position dudit levier (25) engendre le pivotement dudit premier élément de guidage (19) autour de ladite articulation (22).

D'une manière préférentielle, ladite articulation (22) est située dans une partie arrière dudit premier élément de guidage (19). De plus ladite articulation (22) est avantageusement disposée en arrière et au-dessus de l'axe (45) dudit rotor (15). L'atout majeur d'une telle disposition de ladite articulation (22) est visible sur les figures 5 et 6. En effet la figure 5 représente plus précisément ledit premier élément de guidage (19) dans une première position de réglage relativement éloignée dudit rotor (15). La figure 6 représente par contre ledit premier élément de guidage (19) dans une deuxième position de réglage relativement proche dudit rotor (15). On peut ainsi constater que le pivotement dudit premier élément de guidage (19) a une influence à la fois sur l'ouverture d'entrée (29) et sur l'ouverture de sortie (30) dudit canal de passage (20). Le changement de l'intensité du conditionnement est donc réparti sur toute la longueur dudit canal de passage (20). Il va de soi que ledit premier élément de guidage (19) peut occuper différentes positions intermédiaires entre les positions représentées sur les figures 5 et 6 de manière à affiner le réglage de l'intensité du conditionnement.

Dans l'exemple de réalisation représenté sur les figures, ledit dispositif de traitement du fourrage (8) comporte également un peigne (31) articulé selon un axe (32) situé à l'extérieur dudit canal de passage (20). A titre d'exemple, la figure 4 montre un tel peigne (31) comportant des dents (33) susceptibles de s'engager au moins partiellement dans ledit canal de passage (20) à travers une ou plusieurs fentes (47) ménagées dans ledit premier élément de guidage (19). La ou lesdites fentes (47) sont visibles sur la figure 1 au moyen d'une coupe partielle réalisée dans ledit dispositif de traitement du fourrage (8). A la lumière de la figure 7, un engagement plus prononcé dudit peigne (31) dans ledit canal de passage (20) augmente avantageusement l'intensité du conditionnement. Il est en sus prévu des moyens de blocage pour bloquer ledit peigne (31) dans une position donnée. Ledit peigne (31) constitue donc une possibilité supplémentaire pour le réglage de l'intensité du conditionnement.

Ledit peigne (31) est articulé vis-à-vis desdites fentes (47), de manière à obturer lesdites fentes (47) et ce pour chaque position desdites dents (33). Le fourrage projeté contre ladite surface active (21), laquelle présente ces fentes (47), ne pénètre donc pas dans lesdites fentes (47) et ne risque pas par conséquent de s'y accrocher.

L'axe (32) liant ledit peigne (31) est avantageusement solidaire dudit premier élément de guidage (19). Ainsi lors du réglage de l'intensité du conditionnement au moyen dudit levier (25), ledit peigne (31) est également pivoté autour de ladite articulation (22).

D'une manière connue de l'homme de l'art, ledit dispositif de traitement du fourrage (8) comporte encore un deuxième élément de guidage (34). Ledit deuxième élément de guidage (34) est disposé en aval dudit premier élément de guidage (19), de manière à pouvoir guider le flux de fourrage sortant dudit canal de passage (20).

Ledit deuxième élément de guidage (34) peut avantageusement occuper au moins deux positions par rapport audit rotor (15). Ainsi dans l'exemple de réalisation représenté sur les figures, ledit deuxième élément de guidage (34) est lié de manière pivotante audit caisson (9) au moyen d'une articulation (35) d'axe (36). Ledit axe (36) est avantageusement parallèle audit axe de rotation (45) dudit rotor (15). D'une manière préférentielle, ladite articulation (35) est située dans une partie arrière dudit deuxième élément de guidage (34).

Dans une première configuration telle que représentée sur les figures 2, 4 et 6, ledit deuxième élément de guidage (34) est disposé dans le prolongement dudit premier élément de guidage (19). Le flux de fourrage continue ainsi d'être guidé sur la trajectoire qu'il avait en quittant ledit canal de passage (20). Cette configuration dudit deuxième élément de guidage (34) permet audit fourrage d'atteindre lesdits déflecteurs latéraux (12) représentés à la figure 1. Le fourrage sera alors déposé au sol de manière à former un andain de largeur calibré.

Selon une autre caractéristique importante de la présente invention, il est en sus prévu une liaison (39) entre ledit premier élément de guidage (19) et ledit deuxième élément de guidage (34), de manière à ce que tout changement de position dudit premier élément de guidage (19) modifie automatiquement la position dudit deuxième élément de guidage (34).

Dans l'exemple de réalisation représenté sur les figures, ladite liaison (39) est avantageusement réalisée par la mise en butée et le maintien dudit deuxième élément de guidage (34) contre ledit premier élément de guidage (19).

A cet effet et en se reportant à la figure 8, ledit deuxième élément de guidage (34) comporte avantageusement un bec (40) destiné à venir en appui contre un support (41) ménagé sur ledit premier élément de guidage (19).

Le maintien dudit bec (40) contre ledit support (41) est réalisé au moyen d'un élément élastiquement déformable (42). A la lumière de la figure 2, ledit élément élastiquement déformable (42) est lié audit caisson (9). Ledit élément élastiquement déformable (42) est avantageusement disposé de manière à créer un couple autour dudit axe (36) afin que, dans la première configuration telle que représentée sur les figures 2, 4 et 6, ledit bec (40) soit maintenu plaqué contre ledit support (41).

A la lumière des figures 5 et 6, lorsque ledit deuxième élément de guidage (34) est placé dans la première configuration, ledit élément élastiquement déformable (42) permet de maintenir le contact entre ledit bec (40) et ledit support (41), quelle que soit la position de réglage dudit premier élément de guidage (19). Ledit élément élastiquement déformable (42) provoque de ce fait une modification de l'orientation dudit deuxième élément de guidage (34) lors des changements de position dudit premier élément de guidage (19). Ledit deuxième élément de guidage (34) reste ainsi toujours dans le prolongement dudit premier élément de guidage (19), même lors du pivotement de ce dernier autour de ladite articulation (22). Il en résulte que, dans la première configuration dudit deuxième élément de guidage (34) et quel que soit le réglage dudit premier élément de guidage (19), le flux de fourrage ne subit avantageusement ni décrochement ni changement brusque de direction lors de son passage dudit premier élément de guidage (19) audit deuxième élément de guidage (34).

D'une manière préférentielle, ledit bec (40) est disposé dans une partie avant dudit deuxième élément de guidage (34). Pour sa part, ledit support (41) est avantageusement situé en avant de ladite articulation (22) liant ledit premier élément de guidage (19) audit caisson (9). De plus, ledit support (41) est avantageusement décalé par rapport à ladite surface active (21), de manière à sortir dudit canal de passage (20). De ce fait, ladite liaison (39) ne vient pas perturber l'écoulement du flux de fourrage.

A la lumière des figures 3 et 7, ledit deuxième élément de guidage (34) peut également être disposé suivant une deuxième configuration au moyen d'un deuxième organe de commande (44). Dans cette deuxième configuration, ledit deuxième élément de guidage (34) est pivoté autour de ladite articulation (35) de manière à être placé au travers du flux de fourrage sortant dudit canal de passage (20). Une surface active (37) dudit deuxième élément de guidage (34) rabat alors le flux de fourrage vers le sol avant que ce dernier n'atteigne lesdits déflecteurs latéraux (12). Ainsi le fourrage est déposé au sol sans être regroupé. D'une manière préférentielle, ladite surface active (37) est munie d'ailettes (38) sensiblement verticales. Lesdites ailettes (38) permettent avantageusement de répartir le flux de fourrage sur toute la largeur de ladite faucheuse (1). Cela permet, en cas de nécessité, d'accélérer encore le séchage du fourrage. Bien entendu, dans la première configuration dudit deuxième élément de guidage (34), ladite surface active (37) et lesdites ailettes (38) ne sont pas au contact dudit fourrage.

Ledit élément élastiquement déformable (42) est également disposé de manière à créer un autre couple afin que, dans la deuxième configuration telle que représentée sur les figures 3 et 7, ledit deuxième élément de guidage (34) vienne en appui contre une autre butée non représentée. Ainsi ledit élément élastiquement déformable (42) permet de maintenir de manière stable ledit deuxième élément de guidage (34) dans ladite deuxième configuration. Dans l'exemple de réalisation représenté, ledit élément élastiquement déformable (42) est un ressort de traction. On notera que sur les figures 2 et 3, ledit ressort de traction a été représenté de manière symbolique.

Le deuxième organe de commande (44) est destiné à pivoter ledit deuxième élément de guidage (34) dans les différentes configurations.

Dans l'exemple de réalisation représenté sur les figures 2 et 3, ledit deuxième organe de commande (44) est constitué d'un levier (43) lequel est avantageusement disposé en dehors dudit caisson (9). Ledit levier (43) est lié rigidement à un arbre disposé suivant ledit axe (36) et supportant ledit deuxième élément de guidage (34). Ainsi à la lumière de la figure 3, le pivotement dudit levier (43) provoque le pivotement dudit deuxième élément de guidage (34) autour de ladite articulation (35).

D'une manière préférentielle, ledit élément élastiquement déformable (42) est également disposé en dehors dudit caisson (9). Ledit élément élastiquement déformable (42) est alors lié d'une part audit caisson (9) et d'autre part audit levier (43).

La faucheuse agricole (1) qui vient d'être décrite n'est qu'un exemple de réalisation qui ne saurait en aucun cas limiter le domaine de protection défini par les revendications suivantes.

Ainsi selon un autre exemple de réalisation non représenté, ladite liaison (39) peut être réalisée au moyen d'éléments liant ledit premier organe de commande (24) et ledit deuxième organe de commande (44), de manière à avoir un mouvement adéquat dudit deuxième élément de guidage (34) lors du réglage dudit premier élément de guidage (19).

Selon un autre exemple de réalisation, ledit deuxième élément de guidage (34) est lié de manière pivotante au moyen de ladite articulation (35), non pas audit caisson (9), mais audit premier élément de guidage (19).

Selon encore un autre exemple de réalisation, l'axe (36) de ladite articulation (35) est confondu avec l'axe (23) de ladite articulation (22).

Le dispositif de traitement du fourrage (8) conforme à la présente invention peut également équiper une machine agricole ne comportant pas de dispositif de coupe (4). Une telle machine comporte alors un dispositif pour ramasser le fourrage déjà coupé se trouvant sur le sol.

## Revendications

1. Dispositif de traitement du fourrage comportant :
- un caisson (9) pourvu d'une section d'entrée (10) et d'une section de sortie (11) pour le fourrage,
- un rotor (15) lié audit caisson (9), de manière à être entraîné en rotation autour d'un axe longitudinal (45) afin de transporter ledit fourrage vers ladite section de sortie (11),
- un premier élément de guidage (19) entourant partiellement ledit rotor (15) de manière à définir un canal de passage (20) pour ledit fourrage, et
- un deuxième élément de guidage (34) disposé, de manière à guider le flux de fourrage sortant dudit canal de passage (20), ledit deuxième élément de guidage (34) pouvant être disposé dans au moins deux configurations par rapport audit rotor (15),
***caractérisé par le fait que*** qu'il est prévu un premier organe de commande (24) destiné à déplacer le premier élément de guidage (19) dans au moins deux positions par rapport audit rotor (15) et à le maintenir dans ces positions, qu'il est prévu une liaison (39) entre ledit premier élément de guidage (19) et ledit deuxième élément de guidage (34), de manière à ce qu'un changement de position dudit premier élément de guidage (19) modifie, dans sa première configuration, la position dudit deuxième élément de guidage (34) et qu'il est prévu un deuxième organe de commande (44) destiné à disposer ledit deuxième élément de guidage (34) suivant les différentes configurations.

2. Dispositif de traitement du fourrage selon la revendication 1, ***caractérisé par le fait que*** ledit premier élément de guidage (19) est lié de manière pivotante audit caisson (9) au moyen d'une articulation (22) d'axe (23) située dans la partie arrière dudit élément de guidage (19), lequel axe (23) est sensiblement parallèle à l'axe de rotation (45) du rotor (15) et est disposé en arrière dudit axe de rotation (45).

3. Dispositif de traitement du fourrage selon la revendication 1 ou 2, ***caractérisé par le fait qu'**il* comporte en sus un peigne (31) articulé selon un axe (32) solidaire dudit premier élément de guidage (19), ledit peigne (31) étant destiné à s'engager au moins partiellement dans ledit canal de passage (20).

4. Dispositif de traitement du fourrage selon la revendication 1, ***caractérisé par le fait que*** ledit deuxième élément de guidage (34) est lié de manière pivotante audit caisson (9) au moyen d'une articulation (35) d'axe (36).

5. Dispositif de traitement du fourrage selon la revendication 1, ***caractérisé par le fait que*** ledit deuxième élément de guidage (34) est lié de manière pivotante audit premier élément de guidage (19) au moyen d'une articulation (35) d'axe (36).

6. Dispositif de traitement du fourrage selon la revendication 4 ou 5, ***caractérisé par le fait que*** l'axe (36) de ladite articulation (35) est parallèle audit axe de rotation (45) dudit rotor (15).

7. Dispositif de traitement du fourrage selon l'une quelconque des revendications 4 à 6, ***caractérisé par le fait que*** ladite articulation (35) est située dans une partie arrière dudit deuxième élément de guidage (34).

8. Dispositif de traitement du fourrage selon la revendication 2 prise en combinaison avec l'une quelconque des revendications 4 à 7, ***caractérisé par le fait que* l**'axe (36) de ladite articulation (35) liant ledit deuxième élément de guidage (34) audit caisson (9) ou audit premier élément de guidage (19) est confondu avec l'axe (23) de ladite articulation (22) liant ledit premier élément de guidage (19) audit caisson (9).

9. Dispositif de traitement du fourrage selon l'une quelconque des revendications 1 à 8, ***caractérisé par le fait que*** ladite liaison (39) est réalisée par la mise en butée et le maintien dudit deuxième élément de guidage (34) contre ledit premier élément de guidage (19).

10. Dispositif de traitement du fourrage selon la revendication 9, ***caractérisé par le fait que*** ledit deuxième élément de guidage (34) comporte un bec (40) destiné à venir en appui contre un support (41) ménagé sur ledit premier élément de guidage (19).

11. Dispositif de traitement du fourrage selon la revendication 10, ***caractérisé par le fait que*** le maintien dudit bec (40) contre ledit support (41) est réalisé au moyen d'un élément élastiquement déformable (42).

12. Dispositif de traitement du fourrage selon la revendication 10, ***caractérisé par le fait que*** ledit bec (40) est disposé dans une partie avant dudit deuxième élément de guidage (34).

13. Dispositif de traitement du fourrage selon l'une quelconque des revendications 10 ou 11 prise en combinaison avec la revendication 2, ***caractérisé par le fait que*** ledit support (41) est situé en avant de ladite articulation (22) liant ledit premier élément de guidage (19) audit caisson (9).

14. Dispositif de traitement du fourrage selon l'une quelconque des revendications 10 à 13, ***caractérisé par le fait que*** ledit support (41) est décalé par rapport à une surface active (21) dudit premier élément de guidage (19), de manière à sortir dudit canal de passage (20).

15. Dispositif de traitement du fourrage selon la revendication 11 prise en combinaison avec la revendication 1, ***caractérisé par le fait que*** ledit élément élastiquement déformable (42) est lié d'une part audit caisson (9) et d'autre part à un levier (43) dudit deuxième organe de commande (44).

16. Machine agricole, ***caractérisée par le fait qu'***elle comporte un dispositif de traitement du fourrage (8) selon l'une quelconque des revendications 1 à 15.

17. Machine agricole selon la revendication 16, ***caractérisée par le fait qu'**il* s'agit d'une faucheuse agricole (1) comportant en sus un dispositif de coupe (4) disposé en avant dudit dispositif de traitement du fourrage (8).

## Claims

1. Device for processing fodder comprising:
- a casing (9) provided with an inlet section (10) and an outlet section (11) for the fodder,
- a rotor (15) connected to the said casing (9), so as to be driven in rotation about a longitudinal axis (45) in order to transport the fodder toward the said outlet section (11),
- a first guide element (19) partially surrounding the said rotor (15) so as to define a passage channel (20) for the said fodder, and
- a second guide element (34) arranged so as to guide the flow of fodder leaving the said passage channel (20), the said second guide element (34) being able to be arranged in at least two configurations relative to the said rotor (15),
***characterized in* that** a first control member (24) is provided which is intended to move the first guide element (19) into at least two positions relative to the said rotor (15) and to hold it in these positions, a link (39) is provided between the first guide element (19) and the said second guide element (34), so that a change of position of the said first guide element (19) modifies, in its first configuration, the position of the said second guide element (34) and that a second control member (44) is provided which is intended to arrange the said second guide element (34) according to the various configurations.

2. Device for processing fodder as claimed in claim 1, ***characterized in* that** the said first guide element (19) is connected pivotingly to the said casing (9) by means of an articulation (22) with an axis (23) situated in the rear portion of the said guide element (19), which axis (23) is substantially parallel to the axis of rotation (45) of the rotor (15) and is arranged at the rear of the said axis of rotation (45).

3. Device for processing fodder as claimed in claim 1 or 2, ***characterized in* that** it also comprises a comb (31) articulated on an axis (32) firmly attached to the said first guide element (19), the said comb (31) being intended to engage at least partially in the said passage channel (20).

4. Device for processing fodder as claimed in claim 1, ***characterized in* that** the said second guide element (34) is connected pivotingly to the said casing (9) by means of an articulation (35) with an axis(36).

5. Device for processing fodder as claimed in claim 1, ***characterized in* that** the said second guide element (34) is connected pivotingly to the said first guide element (19) by means of an articulation (35) with an axis (36).

6. Device for processing fodder as claimed in claim 4 or 5, ***characterized in* that** the axis (36) of the said articulation (35) is parallel to the said axis of rotation (45) of the said rotor (15).

7. Device for processing fodder as claimed in any one of claims 4 to 6, ***characterized in* that** the said articulation (35) is situated in a rear portion of the said second guide element (34).

8. Device for processing fodder as claimed in claim 2 taken in combination with any one of claims 4 to 7, ***characterized in* that** the axis (36) of the said articulation (35) connecting the said second guide element (34) to the said casing (9) or to the said first guide element (19) is coincident with the axis (23) of the said articulation (22) connecting the said first guide element (19) to the said casing (9).

9. Device for processing fodder as claimed in any one of claims 1 to 8, ***characterized in* that** the said link (39) is made by abutting and holding the said second guide element (34) against the said first guide element (19).

10. Device for processing fodder as claimed in claim 9, ***characterized in* that** the said second guide element (34) comprises a nose (40) intended to press against a support (41) made on the said first guide element (19).

11. Device for processing fodder as claimed in claim 10, ***characterized in* that** the said nose (40) is held against the said support (41) by means of an elastically deformable element (42).

12. Device for processing fodder as claimed in claim 10, ***characterized in* that** the said nose (40) is arranged in a front portion of the said second guide element (34).

13. Device for processing fodder as claimed in any one of claims 10 or 11 taken in combination with claim 2, ***characterized in* that** the said support (41) is situated in front of the said articulation (22) connecting the said first guide element (19) to the said casing (9).

14. Device for processing fodder as claimed in any one of claims 10 to 13, ***characterized in* that** the said support (41) is offset relative to an active surface (21) of the said first guide element (19), so as to come out of the said passage channel (20).

15. Device for processing fodder as claimed in claim 11 taken in combination with claim 1, ***characterized in* that** the said elastically deformable element (42) is connected on one hand to the said casing (9) and on the other hand to a lever (43) of the said second control member (44).

16. Agricultural machine, ***characterized in* that** it comprises a device for processing fodder (8) as claimed in any one of claims 1 to 15.

17. Agricultural machine as claimed in claim 16, ***characterized in* that** it is an agricultural mower (1) additionally comprising a cutting device (4) arranged in front of the said device for processing fodder (8).

## Patentansprüche

1. Vorrichtung zur Behandlung von Futter mit:
- einem Kasten (9), der mit einem Eintrittsabschnitt (10) und einem Austrittsabschnitt (11) für das Futter versehen ist,
- einem Rotor (15); der mit dem Kasten (9) derart verbunden ist, dass er in Drehung um eine Längsachse (45) angetrieben wird, um das Futter zum Austrittsabschnitt (11) zu befördern,
- einem ersten Führungselement (19), das teilweise den Rotor (15) umgibt, um einen Durchgangskanal (20) für das Futter zu definieren, und
- einem zweiten Führungselement (34), das derart angeordnet ist, dass es den aus dem Durchgangskanal (20) austretenden Futterstrom führt, wobei das zweite Führungselement (34) in mindestens zwei Konfigurationen in Bezug auf den Rotor (15) angeordnet werden kann,
***dadurch gekennzeichnet,* dass** ein erstes Steuerelement (24) vorgesehen ist, das dazu bestimmt ist, das erste Führungselement (19) in mindestens zwei Positionen in Bezug auf den Rotor (15) zu verschieben und dieses in diesen Positionen zu halten, dass eine Verbindung (39) zwischen dem ersten Führungselement (19) und dem zweiten Führungselement (34) vorgesehen ist, so dass eine Positionsänderung des ersten Führungselements (19), die Position in seiner ersten Konfiguration des zweiten Führungselements (34) ändert, und dass ein zweites Steuerelement (44) vorgesehen ist, das dazu bestimmt ist, das zweite Führungselement (34) nach den verschiedenen Konfigurationen anzuordnen.

2. Vorrichtung zur Behandlung von Futter nach Anspruch 1, ***dadurch gekennzeichnet,* dass** das erste Führungselement (19) schwenkbar mit dem Kasten (9) mittels eines Gelenks (22) mit einer Achse (23) verbunden ist, das sich im hinteren Teil des Führungselements (19) befindet, wobei die Achse (23) im Wesentlichen parallel zur Drehachse (45) des Rotors (15) und hinter der Drehachse (45) angeordnet ist.

3. Vorrichtung zur Behandlung von Futter nach Anspruch 1 oder 2, ***dadurch gekennzeichnet,* dass** sie ferner einen Kamm (31) umfasst, der entlang einer Achse (32), die mit dem ersten Führungselement (19) verbunden ist, angeordnet ist, wobei dieser Kamm (31) dazu bestimmt ist, zumindest teilweise in den Durchgangskanal (20) einzugreifen.

4. Vorrichtung zur Behandlung von Futter nach Anspruch 1, ***dadurch gekennzeichnet,* dass** das zweite Führungselement (34) schwenkbar mit dem Kasten (9) mittels eines Gelenks (35) mit einer Achse (36) verbunden ist.

5. Vorrichtung zur Behandlung von Futter nach Anspruch 1, ***dadurch gekennzeichnet,* dass** das zweite Führungselement (34) schwenkbar mit dem ersten Führungselement (19) mittels eines Gelenks (35) mit einer Achse (36) verbunden ist.

6. Vorrichtung zur Behandlung von Futter nach Anspruch 4 oder 5, ***dadurch gekennzeichnet,* dass** die Achse (36) des Gelenks (35) parallel zur Drehachse (45) des Rotors (15) ist.

7. Vorrichtung zur Behandlung von Futter nach irgend einem der Ansprüche 4 bis 6, ***dadurch gekennzeichnet,* dass** das Gelenk (35) in einem hinteren Teil des zweiten Führungselements (34) angeordnet ist.

8. Vorrichtung zur Behandlung von Futter nach Anspruch 2 in Kombination mit irgend einem der Ansprüche 4 bis 7, ***dadurch gekennzeichnet,* dass** die Achse (36) des Gelenks (35), das das zweite Führungselement (34) mit dem Kasten (9) oder dem ersten Führungselement (19) verbindet, mit der Achse (23) des Gelenks (22), das das erste Führungselement (19) mit dem Kasten (9) verbindet, zusammenfällt.

9. Vorrichtung zur Behandlung von Futter nach irgend einem der Ansprüche 1 bis 8, ***dadurch gekennzeichnet,* dass** die Verbindung (39) durch Anschlagen und Halten des zweiten Führungselements (34) am ersten Führungselement (19) verwirklicht ist.

10. Vorrichtung zur Behandlung von Futter nach Anspruch 9, ***dadurch gekennzeichnet,* dass** das zweite Führungselement (34) eine Nase (40) umfasst, die dazu bestimmt ist, an einer Stütze (41) anzuschlagen, die auf dem ersten Führungselement (19) vorgesehen ist.

11. Vorrichtung zur Behandlung von Futter nach Anspruch 10, ***dadurch gekennzeichnet,* dass** das Halten der Nase (40) an der Stütze (41) mit Hilfe eines elastisch verformbaren Elements (42) erfolgt.

12. Vorrichtung zur Behandlung von Futter nach Anspruch 10, ***dadurch gekennzeichnet,* dass** die Nase (40) in einem vorderen Teil des zweiten Führungselements (34) angeordnet ist.

13. Vorrichtung zur Behandlung von Futter nach irgend einem der Ansprüche 10 oder 11 in Kombination mit Anspruch 2, ***dadurch gekennzeichnet,* dass** die Stütze (41) vor dem Gelenk (22) angeordnet ist, das das erste Führungselement (19) mit dem Kasten (9) verbindet.

14. Vorrichtung zur Behandlung von Futter nach irgend einem der Ansprüche 10 bis 13, ***dadurch gekennzeichnet,* dass** die Stütze (41) in Bezug auf eine aktive Fläche (21) des ersten Führungselements (19) versetzt ist, um aus dem Durchgangskanal (20) auszutreten.

15. Vorrichtung zur Behandlung von Futter nach Anspruch 11 in Kombination mit Anspruch 1, ***dadurch gekennzeichnet,* dass** das elastisch verformbare Element (42) einerseits mit dem Kasten (9) und andererseits mit einem Hebel (43) des zweiten Steuerelements (44) verbunden ist.

16. Landwirtschaftliche Maschine, ***dadurch gekennzeichnet,* dass** sie eine Vorrichtung zur Behandlung von dem Futter (8) nach irgend einem der Ansprüche 1 bis 15 umfasst.

17. Landwirtschaftliche Maschine nach Anspruch 16, ***dadurch gekennzeichnet,* dass** es sich um eine landwirtschaftliche Mähmaschine (1) handelt, die zusätzlich eine Schneidvorrichtung (4), die vor der Vorrichtung zur Behandlung von dem Futter (8) angeordnet ist, umfasst.
